# FASCICULE DE BREVET EUROPEEN

(11) **EP 0 401 080 B1**
(45) Date de publication et mention de la délivrance du brevet: **28.07.1993**
(21) Numéro de dépôt: 90401316.6
(22) Date de dépôt: 17.05.1990
(51) Int. Cl.: B60J 10/06

(54) **Dispositif d'étanchéité pour vitre de porte de véhicule et porte comportant ce dispositif**
Abdichtungssystem für Fahrzeugtürfenster und Türen mit diesem System
Sealing system for car door window and door with this system

(30) Priorité: 02.06.1989 FR 8907349
(43) Date de publication de la demande: 05.12.1990
(73) Titulaire: ROCKWELL AUTOMOTIVE BODY SYSTEMS-FRANCE EN ABREGE:ROCKWELL ABS-FRANCE, 92082 Paris La Defense 2 (FR)
(72) Inventeur: Dauvergne, Jean, 95470 Fosses (FR); Bertolini, Carlo, 75011 Paris (FR)
(74) Mandataire: Martin, Jean-Paul

(56) Documents cités:
- EP-A- 0 369 798
- DE-A- 3 243 123
- DE-A- 3 438 580
- DE-C- 754 829
- US-A- 4 783 930
- US-A- 4 788 794

## Description

La présente invention a pour objet un dispositif d'étanchéité pour vitre de porte de véhicule, ainsi que la porte correspondante.

On connaît (DE-A-3 438 580) des portes de véhicules ayant des vitres à trois côtés affleurant la surface de la carrosserie. Une difficulté essentielle pour pouvoir obtenir l'affleurement des quatre côtés de la vitre avec la surface de la carrosserie réside dans le dispositif d'étanchéité de la vitre. En effet, une étanchéité de vitre à trois côtés affleurants est relativement aisée a réaliser, la vitre n'ayant au cours de la phase d'ouverture ou de fermeture qu'un mouvement suivant le cylindre de vitre.

Or, pour pouvoir obtenir également l'affleurement du quatrième côté de la vitre, celle-ci doit exécuter un mouvement dans une direction sensiblement perpendiculaire à sa surface, pour pouvoir s'aligner avec le panneau extérieur de la porte.

Un dispositif classique d'étanchéité ne permet pas un tel déplacement, notamment en raison des déformations trop importantes que doit subir le caoutchouc des joints d'étanchéité.

Par ailleurs, EP-A-0 369 798 (Figure 4) divulgue un dispositif d'étanchéité pour vitre (14) de porte de véhicule, comprenant au moins un joint (40,41) à deux lèvres souples (52,54) appliquées l'une sur l'autre, et un profilé (50) solidaire de la face intérieure de la vitre, comportant une branche (60) orientée dans une direction sensiblement perpendiculaire à la vitre (14). Ce profilé (50) est positionné de manière que sa branche précitée (60) pénètre dans le joint entre les lèvres (52,54) appliquées de manière étanche sur ladite branche (60), aussi bien lorsque la vitre est en position fermée relevée, affleurant par ses quatre côtés, la surface extérieure de la carrosserie du véhicule, que lorsque cette vitre est en position basse ouverte après avoir effectué un déplacement latéral vers l'intérieur du véhicule, et dans toute position intermédiaire.

EP-A-0 369 798 est cité au titre de l'état de la technique selon l'Article 54(3) et (4) CBE pour le jeu de revendications annexées, valable uniquement pour les Etats contractants DE et GB. Les autres revendications annexées sont valables pour les autres Etats contractants (ES, IT, SE) ; pour ces autres Etats contractants (ES, IT, SE), le dispositif d'étanchéité est du type tel que défini dans le préambule de la revendication 1 et divulgué, par exemple, par DE-A-3 438 580.

L'invention a pour but de proposer un dispositif d'étanchéité agencé de façon à permettre un tel déplacement transversal de la vitre pour assurer son affleurement sur ses quatre côtés avec la surface de la carrosserie lorsqu'elle est en position fermée, tout en évitant des déformations trop importantes des joints d'étanchéité qui induiraient des déformations permanentes, sources d'insuffisances d'étanchéité.

Suivant l'invention, le dispositif d'étanchéité est conforme à la revendication 1.

La porte de véhicule équipée de ce dispositif d'étanchéité comprend également des moyens pour déplacer latéralement et guider la vitre de sa position basse ouverte à sa position haute fermée et vice-versa, de façon qu'en position fermée la vitre affleure par ses quatre côtés la surface extérieure de la carrosserie.

Différents modes de réalisation du dispositif d'étanchéité et de la porte correspondante sont indiqués dans les revendications dépendantes.

Suivant un mode de réalisation, les moyens de déplacement latéral et de guidage de la vitre entre ses positions ouverte et fermée comportent des rails portés par des montants du cadre de la porte et s'étendant le long des côtés avant et arrière de la vitre, chacun de ces rails est pourvu de moyens de guidage longitudinal d'un profilé précité, fixé le long du bord intérieur de la vitre afin de guider le déplacement de la vitre, et les extrémités supérieures de ces rails de guidage sont coudées en direction de l'extérieur du véhicule sur une distance correspondant au déplacement latéral que doivent effectuer la vitre et ses profilés coopérant avec les rails, pour que la vitre affleure la surface de la carrosserie en position haute fermée.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en élévation d'une porte de véhicule automobile équipée d'un dispositif d'étanchéité de vitre selon l'invention, le panneau extérieur étant enlevé.

La figure 2 est une vue en coupe transversale du dispositif d'étanchéité de la vitre au niveau du bord supérieur de celle-ci, suivant 2-2 de la Fig.1 dans le cas où la partie supérieure de la porte est dépourvue de cadre de réception de la vitre en position fermée.

La figure 3 est une vue analogue à la Fig.2 dans le cas où la porte est pourvue d'un cadre de réception de la vitre.

La figure 4 est une vue en coupe transversale suivant 4-4 de la Fig.1 du dispositif d'étanchéité du bord arrière de la vitre dans le cas où la porte est dépourvue de cadre de réception de vitre.

La figure 5 est une vue analogue à la Fig.4 dans le cas où la porte est munie d'un cadre de réception de la vitre en position fermée.

La figure 6 est une vue en coupe suivant 6-6 de la Fig.1 du dispositif d'étanchéité du bord inférieur de la vitre.

La figure 7 est une vue en élévation d'un montant arrière de la porte de la Fig.1 et du pilier de la caisse du véhicule, la vitre n'étant pas représentée.

La figure 8 est une vue analogue à la Fig.7, montrant le dispositif de guidage de la vitre et cette dernière en position haute fermée.

La figure 9 est une vue analogue à la Fig.8 montrant la vitre en position basse ouverte.

La figure 10 est une vue en élévation du montant avant de la porte de la Fig.1, avec ses moyens de guidage du bord avant de la vitre, cette dernière n'étant pas représentée.

Les figures 11 et 12 sont des vues analogues à la Fig.10 et montrant de plus respectivement la vitre et son dispositif de guidage en position basse ouverte, et en position haute fermée, le côté avant de la vitre affleurant la surface de la carrosserie.

La figure 13 est une vue en coupe suivant 13-13 de la Fig.11.

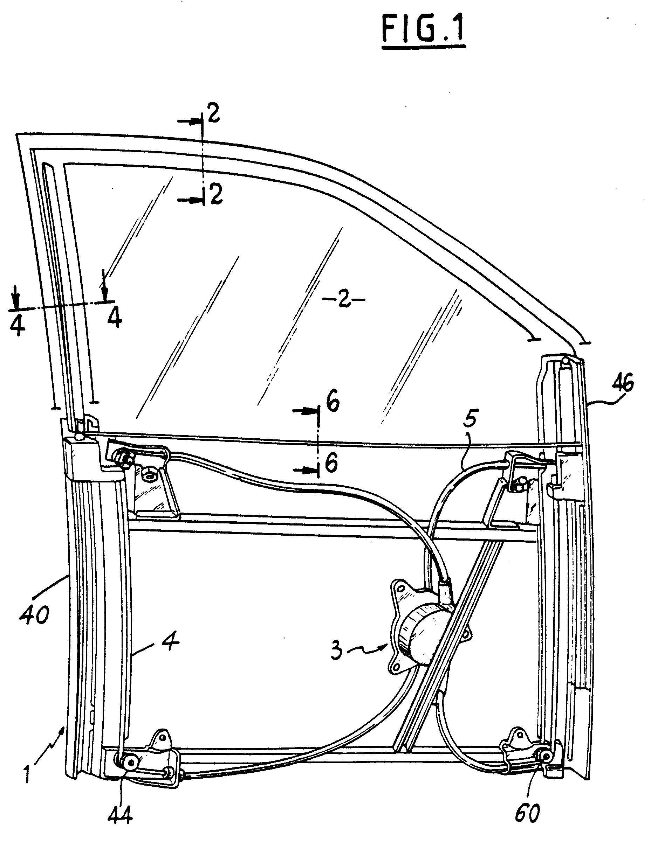

La porte 1 de véhicule représentée à la Fig.1 comprend une vitre 2, de surface cylindrique ou non, et un mécanisme de lève-vitre 3 à câbles 4 et 5, connu en soi. Elle est dépourvue dans sa partie supérieure de cadre de réception du pourtour de la vitre 2, mais peut bien entendu, être munie d'un tel cadre.

La porte 1 est équipée d'un dispositif d'étanchéité qui peut être réalisé de deux manières différentes, selon que la porte 1 est munie ou non d'un cadre de réception de la vitre 2 en position fermée.

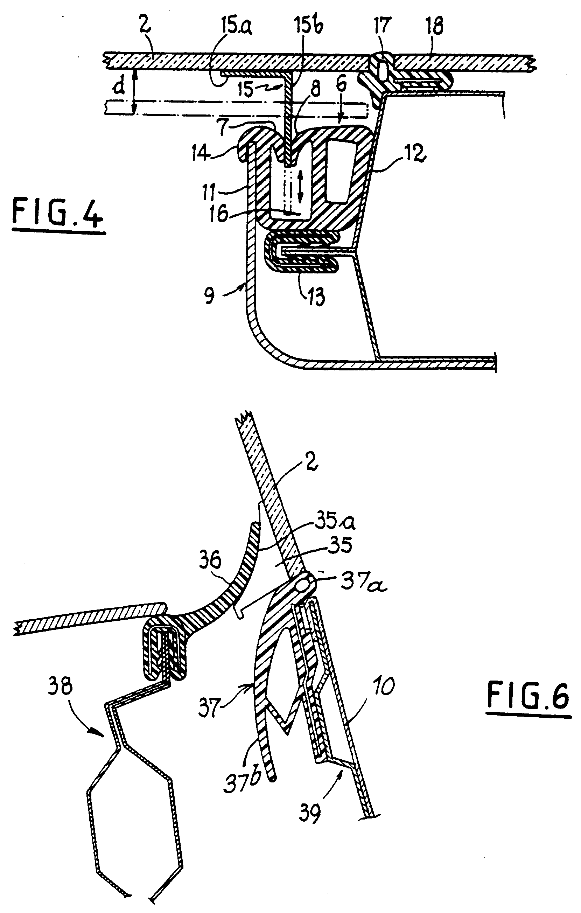

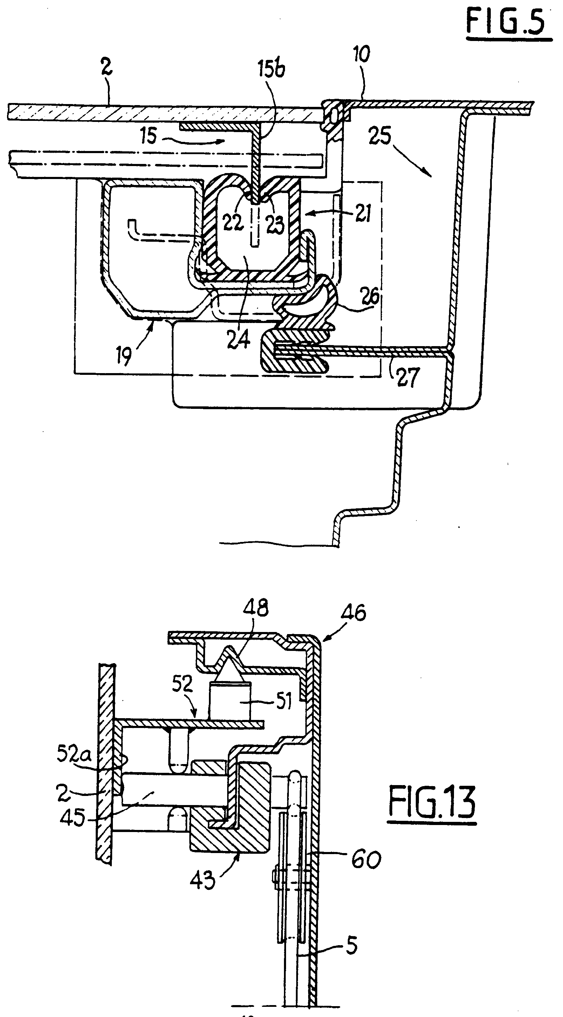

Dans le mode de réalisation de la Fig.4, adapté à une porte sans cadre, le dispositif d'étanchéité comprend un joint 6 à deux lèvres souples 7 et 8 dirigées l'une vers l'autre et normalement appliquées l'une sur l'autre en l'absence de tout élément interposé entre elles. Le joint 6 est fixé sur un pied milieu 9 ou un pied arrière de la caisse du véhicule, selon que la porte 1 est une porte avant ou une porte arrière, par exemple comme représenté par enfoncement entre deux parties 11 et 12, le fond du joint 6 prenant appui sur un support 13 s'étendant entre les parties 11 et 12. Le joint 6 peut être complémentairement maintenu en place par une lèvre extérieure 14 venant coiffer le bord de la partie 11.

Les lèvres 7, 8 délimitent un côté d'un évidement 16 s'étendant sur toute la hauteur du joint 6 et ayant une profondeur appropriée dans une direction perpendiculaire à la vitre, comme explicité ci-après.

Le dispositif d'étanchéité comprend également un profilé 15 solidaire de la face intérieure de la vitre 2, fixé le long de son côté arrière vertical par une branche 15a collée à la vitre 2 ou fixée a celle-ci par tout autre moyen connu en soi. Le profilé 15 comporte complémentairement une branche 15b orientée dans une direction sensiblement perpendiculaire à la vitre 2, et est donc en L dans l'exemple représenté. Le profilé 15 et le joint 6 sont positionnnés et dimensionnés de manière que la branche 15b pénètre dans le joint 6 entre les lèvres 7 et 8 appliquées de manière étanche sur les faces opposées de ladite branche 15b, et ce aussi bien lorsque la vitre 2 est en position fermée relevée, (représentée en traits continus à la Fig.4), que lorsque la vitre 2 est en position basse ouverte après avoir effectué un déplacement latéral d vers l'intérieur du véhicule (position en traits mixtes sur la Fig.4).

Pour que l'étanchéité puisse être maintenue durant ce déplacement latéral d, l'évidement 16 a une profondeur assez nettement supérieure à l'amplitude d du déplacement de la vitre 2.

Durant ces déplacements d, les lèvres souples 7 et 8 restent appliquées de manière étanche sur les faces de la branche 15b du profilé 15, grâce à leur conformation appropriée.

Lorsque la vitre 2 est en position fermée affleurant la surface de la carrosserie du véhicule, son étanchéité est complémentairement assurée par un joint secondaire 17 fixé sur la partie extérieure du pied 9 et interposé entre le bord arrière de la vitre 2 et une vitre médiane supplémentaire 18 solidaire du pied 9.

Lorsqu'on ouvre la porte, le profilé 15 sort des lèvres 7, 8 du joint.

Dans le cas où la porte est équipée d'un cadre 19 (Fig.5) le montant arrière de ce cadre est profilé de manière à ménager un logement de réception et de retenue du joint d'étanchéité 21. Ce dernier comporte, comme le joint 6, deux lèvres souples 22, 23 dirigées l'une vers l'autre et qui viennent s'appliquer de manière étanche sur la branche 15b du profilé 15. De même, un évidement 24 de profondeur suffisante pour permettre les déplacements latéraux de la branche 15b est réservé dans le joint 21, entre les positions fermée (en traits continus sur la Fig.5), et ouverte (en traits mixtes) de la vitre 2. Comme dans le joint 6, les lèvres 22 et 23 constituent l'un des côtés du logement 24 de la branche 15b.

L'étanchéité entre le cadre 19 de porte et le pied 25 (milieu ou arrière de la caisse) est assurée par un second joint souple 26 fixé à une aile 27 du pied 25.

L'étanchéité du côté supérieur de la vitre est également réalisée de manière différente selon que la porte 1 est dépourvue ou non de cadre.

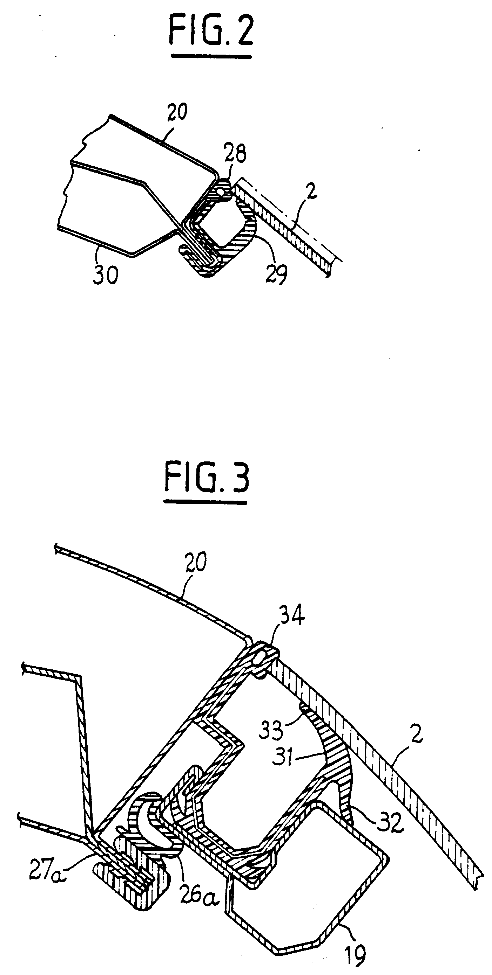

A la Fig.2, qui correspond à une porte 1 sans cadre, la vitre 2 affleure en position fermée le toit 20 du véhicule, et son bord supérieur est en appui sur un joint souple 28 fixé au bord du toit 20. La caisse 30 du véhicule porte également un joint d'étanchéité 29 terminé par une lèvre souple qui vient s'appliquer sur la surface intérieure de la vitre 2. Ce joint 29 remplit de plus le rôle de gouttière d'écoulement de la pluie lorsque la vitre 2 est abaissée.

Dans le cas où la porte est munie d'un cadre 19 (Fig.3), celui-ci est lui-même équipé d'un joint 31 à deux lèvres 32, 33 orientées dans des directions opposées. La lèvre intérieure 32 s'applique sur le cadre 19, tandis que la lèvre extérieure 33 orientée vers le toit 20, s'applique de manière étanche le long du bord supérieur de la vitre 2 lorsque celle-ci est en position de fermeture. Dans cette position également, le bord supérieur de la vitre est appliqué sur un joint complémentaire 34 porté par la caisse sous le bord du toit 20. Un joint 26a porté par une aile 27a de la caisse assure l'étanchéité entre celle-ci et le cadre 19.

Le long du bord inférieur de la vitre 2, le dispositif d'étanchéité comporte (Fig.6) une garniture 35 fixée à la vitre 2, et deux joints à lèvres souples 36, 37 fixés respectivement au panneau intérieur 38 et au panneau extérieur 39 de la porte. La lèvre supérieure 36 est incurvée et orientée vers la vitre de manière à venir s'appliquer sur une surface concave 35a correspondante de la garniture 35 lorsque la vitre 2 est en position relevée, affleurant à la surface extérieure du panneau 39. Le joint 37 comporte une partie terminale supérieure 37a et une lèvre 37b dirigée vers le bas. La partie 37a assure l'étanchéité de la partie basse de la vitre 2 lorsque celle-ci est fermée. On remarque qu'en position fermée la vitre 2 est pratiquement affleurante à la surface de la carrosserie 10.

Lorsque la vitre 2 effectue un déplacement latéral vers sa position basse entre les panneaux 38 et 39, la lèvre 36 glisse d'abord sur la surface d'appui 35a, puis sur la face intérieure de la vitre 2, tandis que la face extérieure de cette dernière glisse sur la lèvre inférieure 37b. Ces lèvres assurent donc l'essuyage de la vitre au cours des montées et des descentes.

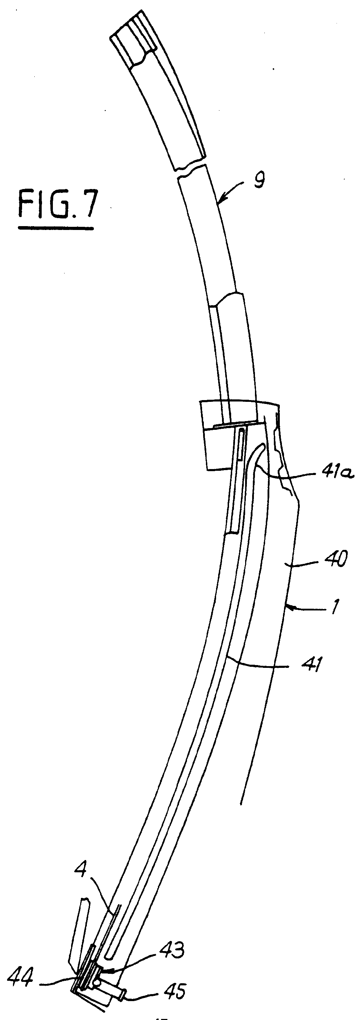

On décrira maintenant les moyens de guidage et d'entraînement permettant à la vitre 2 d'effectuer un déplacement latéral entre sa position basse dans la porte et sa position haute fermée, en référence aux Fig.7 à 13.

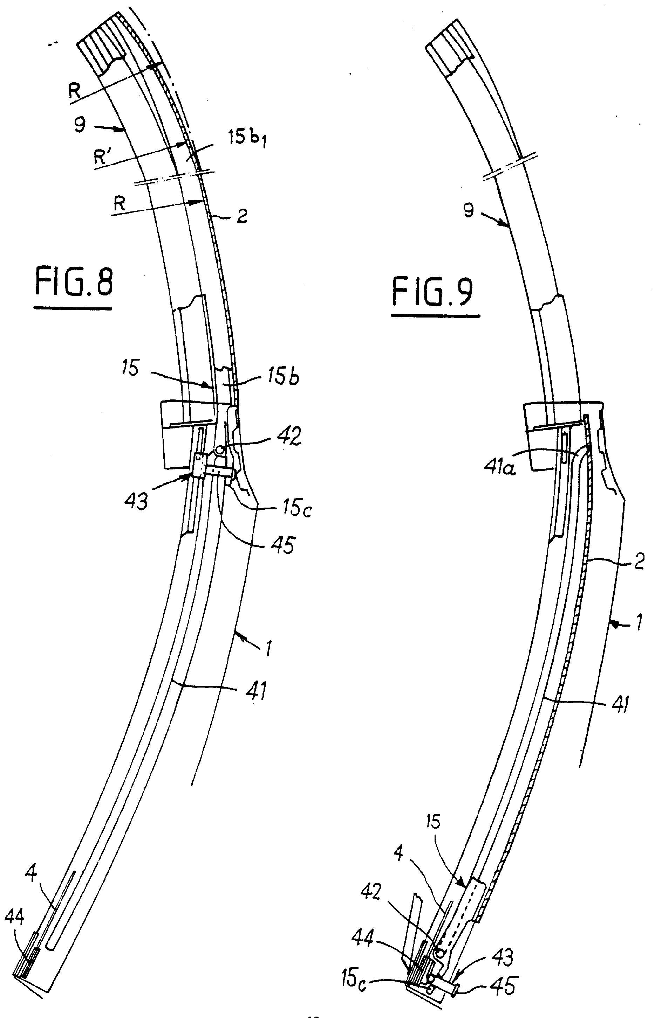

Tout d'abord, en référence aux Fig.7 à 9, on voit un rail 41 formé le long de la face intérieure d'un montant arrière 40 de la porte 1 et réalisé sous la forme par exemple d'une rainure constituant une came de guidage du profilé 15. A cet effet l'extrémité inférieure 15c de la branche 15b de ce dernier comporte un pion 42 qui vient s'engager à coulisse dans la rainure-came 41, dont l'extrémité supérieure 41a est coudée en direction de l'extérieur du véhicule sur une distance correspondant au déplacement latéral d que doivent effectuer la vitre et son profilé 15 pour que la vitre passe de sa position fermée (Fig.8) à sa position ouverte (Fig.9).

Le profilé 15 est en outre muni à son extrémité inférieure d'une pièce 43 solidarisée avec le câble 4 de lève-vitre passant sur une poulie 44 située à la partie inférieure de la porte 1. La pièce 43 comporte une extension transversale ou doigt 45 qui traverse librement l'extrémité inférieure 15c de la branche 15b. Cet agencement permet au profilé 15 de se déplacer transversalement sur la pièce 43 en fin de course de fermeture de la vitre 2, le câble 4 entraînant le profilé 15 et la vitre 2.

Comme visible en particulier à la Fig.8, le rayon de courbure de la vitre 2 peut varier, passant d'une valeur R pour sa partie inférieure à une valeur R' inférieure à R pour sa partie supérieure. Le joint d'étanchéité et sa branche 15b sont alors dimensionnés pour pouvoir absorber cette variation du rayon de courbure, par exemple par une variation de la largeur de sa branche 15b, dont on voit que sa partie supérieure 15b1, correspondant au rayon R', est sensiblement plus large que sa partie inférieure.

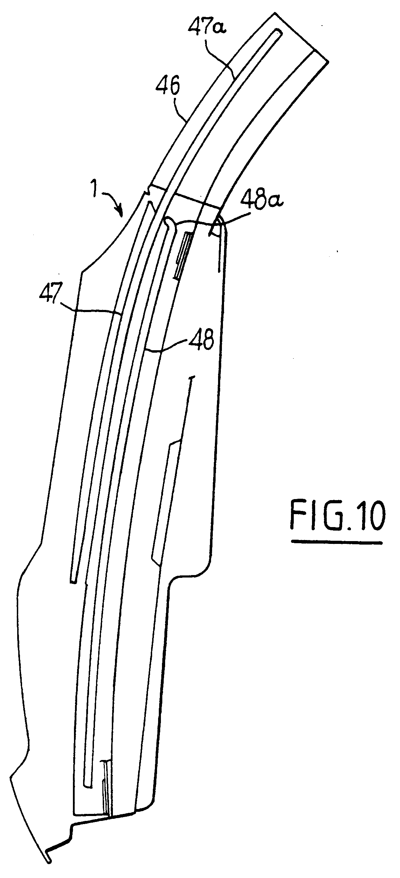

On décrira maintenant les moyens de guidage de la vitre en référence aux Fig.10 à 13.

Le montant avant 46 de la porte 1 s'étend sur une hauteur supérieure à celle de son montant arrière 40, pour pouvoir recevoir le côté avant vertical de la vitre 2 en position haute fermée. Dans le montant avant 46 sont ménagés des rails 47 et 48 de guidage du déplacement de la vitre 2, formés par des cames telles que par exemple des rainures. Ces deux rainures-cames 47 et 48 sont décalées transversalement ainsi qu'en hauteur, de telle sorte que le rail ou came extérieur 47 commence dans une zone du montant 46 située nettement au-dessus de son bord inférieur, et s'étend pratiquement jusqu'à son extrémité supérieure. Par contre, le rail 48 s'étend du voisinage du bord inférieur du montant 46 et s'arrête nettement avant l'extrémité supérieure de ce montant, au-dessous du bord inférieur de la vitre 2 fermée. Le rail 48 se termine par une extrémité coudée 48a qui s'étend transversalement sur une distance correspondant au déplacement latéral d que doit effectuer la vitre 2 pour passer de sa position ouverte à sa position fermée et inversement.

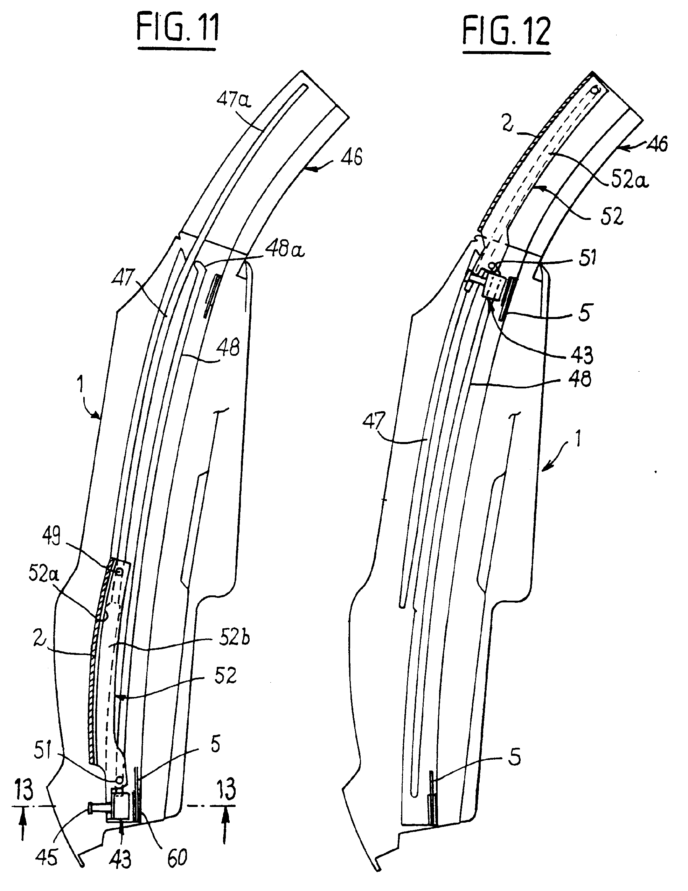

Chaque came 47, 48 reçoit à coulisse un élément de guidage tel qu'un pion respectif 49, 51 solidaire d'un profilé 52 qui peut avoir le même profil en L que le profilé 15 (Fig.11 et 12). Les pions supérieur 49 et inférieur 51 sont alors solidaires des extrémités de la branche transversale 52b du profilé 52, dont la seconde branche 52a est fixée sur la face intérieure de la vitre 2. Il convient de noter que le tracé de la came extérieure 47 se rapproche dans sa partie supérieure 47a de la surface extérieure de la carrosserie. Par ailleurs, comme pour le côté arrière de la vitre 2, le profilé 52 est solidarisé par son extrémité inférieure avec une pièce d'entraînement 43 dont le doigt transversal 45 traverse librement l'extrémité inférieure du profilé 52. La pièce 43 est attachée au câble 5 du lève-vitre 3, ce câble passant sur une poulie de renvoi 60.

En position basse fermée, la vitre 2, son profilé 52 et la pièce d'entraînement 43 sont dans la position représentée à la Fig.11. Lorsque le lève-vitre 3 est mis en route, le câble 5 et la pièce 43 entraînent le profilé 52 et la vitre 2 vers le haut, de sorte que les pions 49 et 51 coulissent respectivement dans les cames de guidage 47 et 48, la vitre 2 se rapprochant progressivement de la surface extérieure de la carrosserie. En fin de course, le pion 51 coulisse transversalement dans la partie terminale 48a du rail-came 48 et vient en butée, de sorte que la vitre 2 se place dans la position affleurante de la Fig.12.

Ainsi est réalisé un dispositif de guidage et d'étanchéité permettant à la vitre 2 d'affleurer la surface de la carrosserie sur ses quatre côtés.

Le lève-vitre 3 peut être remplacé par un lève-vitre à bras oscillants, reliés aux profilés de vitre 15, 52 par des liaisons d'entraînement appropriées. Il convient aussi de noter que le bord inférieur de la vitre 2 peut être non rectiligne (partie en ceinture).

## Revendications (Revendications pour l'(les) Etat(s) contractant(s) suivant(s): DE, GB)

1. Dispositif d'étanchéité pour vitre (2) de porte (1) de véhicule, comprenant au moins un joint (6 ou 21) à deux lèvres souples (7, 8; 22, 23) appliquées l'une sur l'autre, et un profilé (15) solidaire de la face intérieure de la vitre, comportant une branche (15b) orientée dans une direction sensiblement perpendiculaire à la vitre, ce profilé (15) étant positionné de manière que sa branche précitée (15b) pénètre dans le joint (6, 21) entre les lèvres appliquées de manière étanche sur ladite branche (15b), aussi bien lorsque la vitre (2) est en position fermée relevée, affleurant par ses quatre côtés la surface extérieure de la carrosserie (10) du véhicule, que lorsque cette vitre est en position basse ouverte après avoir effectué un déplacement latéral (d) vers l'intérieur du véhicule, et dans toute position intermédiaire , et comportant une garniture (35) fixée le long du bord inférieur de la vitre (2), et deux lèvres d'étanchéité (36, 37) fixées sur la porte (1) et agencées de telle manière qu'en position haute fermée de la vitre l'une (36) des lèvres s'applique de manière étanche sur la garniture, et qu'en position basse ouverte de la vitre, après déplacement latéral de cette dernière, la seconde lèvre (37) s'applique de manière étanche sur la surface extérieure de la vitre.

2. Dispositif selon la revendication 1 caractérisé en ce qu'il comprend un autre joint d'étanchéité (17) fixé sur un élément de carrosserie le long d'un au moins des côtés avant et arrière de la vitre (2) et qui est positionné pour s'appliquer sur le bord de la vitre lorsque celle-ci est en position haute fermée, affleurant la surface extérieure de la carrosserie.

3. Dispositif selon l'une des revendications 1 et 2, destiné notamment à des vitres non cylindriques, caractérisé en ce que la branche (15b) du profilé (15), sensiblement perpendiculaire à la vitre, et le joint d'étanchéité (21) sont dimensionnés de manière à pouvoir absorber une variation du rayon de courbure (R) de la vitre (2), par exemple par une variation de la largeur de ladite branche (15b, 15b1).

4. Porte de véhicule, caractérisée en ce qu'elle comporte un dispositif d'étanchéité selon l'une quelconque des revendications 1 à 3, ainsi que des moyens pour déplacer latéralement et guider la vitre (2) de sa position basse ouverte à sa position haute fermée et vice-versa, de façon qu'en position fermée la vitre affleure par ses quatre côtés la surface extérieure de la carrosserie.

5. Porte selon la revendication 4, dépourvue de cadre de réception de la vitre (2) en position relevée fermée, caractérisée en ce que son dispositif d'étanchéité comprend deux joints (6) fixés à des éléments (9) de la caisse du véhicule le long des côtés avant et arrière de la vitre.

6. Porte selon la revendication 4, comprenant un cadre de réception de la vitre (2) en position relevée fermée, caractérisée en ce que son dispositif d'étanchéité comprend deux joints (21) fixés sur des montants (19) du cadre.

7. Porte selon l'une quelconque des revendications 4 à 6, caractérisée en ce que les moyens de déplacement latéral et de guidage de la vitre (2) entre ses positions ouverte et fermée comportent des rails (41, 48) portés par des montants (40, 46) du cadre de la porte (1) et s'étendant le long des côtés avant et arrière de la vitre, chacun de ces rails est pourvu de moyens de guidage longitudinal d'un profilé précité (15, 52), fixé le long du bord intérieur de la vitre afin de guider le déplacement de la vitre, et les extrémités supérieures (41a, 48a) de ces rails de guidage (41, 48) sont coudées en direction de l'extérieur du véhicule sur une distance correspondant au déplacement latéral (d) que doivent effectuer la vitre et ses profilés (15, 52) coopérant avec les rails, pour que la vitre affleure la surface de la carrosserie en position haute fermée.

8. Porte selon la revendication 7, caractérisée en ce que les rails sont deux cames (47, 48), sous forme par exemple de rainures, qui reçoivent chacune à coulisse un élément (49, 51) tel qu'un pion, solidaire du profilé de vitre associé (52), ces deux cames (47, 48) sont décalées transversalement, la came intérieure (48) reçoit un élément de guidage (51) fixé à la partie inférieure du profilé (52), et l'extrémité supérieure (48a) de cette came intérieure (48) est coudée transversalement vers l'extérieur du véhicule sur une longueur correspondant au déplacement latéral (d) que doit effectuer la vitre (2) en fin de course vers sa position fermée, tandis que le tracé de la came extérieure (47) se rapproche dans sa partie supérieure (47a) de la surface extérieure de la carrosserie.

9. Porte selon la revendication 8, caractérisée en ce que les moyens de guidage de la vitre (2) comprennent une came (41), sous forme par exemple d'une rainure le long du bord arrière de la vitre, formée dans un montant (40) du cadre de la porte (1), cette rainure (41) recevant à coulisse un élément de guidage (42) tel qu'un pion solidaire du profilé de vitre associé (15) et son extrémité supérieure (41a) est coudée transversalement vers l'extérieur du véhicule sur une longueur correspondant au déplacement latéral (d) de la vitre en fin de course vers sa position fermée.

10. Porte selon l'une des revendications 8 et 9, caractérisée en ce que les éléments de guidage (42, 49, 51) des profilés (15, 52) sur les cames (41, 47, 48) son fixés aux extrémités des branches (15b, 52b) des profilés sensiblement perpendiculaires à la vitre (2).

11. Porte selon l'une quelconque des revendications 4 à 10, caractérisée en ce que chaque profilé (15, 52) est équipé d'une pièce (43) susceptible d'être entraînée par un mécanisme de lève-vitre (3), et qui comporte une extension transversale (45) traversant librement le profilé, lequel peut ainsi se déplacer transversalement sur ladite pièce en fin de course de fermeture de la vitre (2).

12. Porte selon la revendication 11, caractérisée en ce que la pièce (43) d'entraînement du profilé (15, 52) est solidaire d'un câble (4, 5) de lève-vitre (3).

## Revendications (Revendications pour l'(les) Etat(s) contractant(s) suivant(s): ES, IT, SE)

1. Dispositif d'étanchéité pour vitre (2) de porte (1) de véhicule, comprenant au moins un joint (6 ou 21) et un profilé (15) solidaire de la face intérieure de la vitre, comportant une branche (15b) orientée dans une direction sensiblement perpendiculaire à la vitre, la vitre (2) étant déplaçable aussi bien en position fermée relevée, affleurant par ses quatre côtés la surface extérieure de la carrosserie (10) du véhicule, qu'en position basse ouverte après avoir effectué un déplacement latéral (d) vers l'intérieur du véhicule, et dans toute position intermédiaire caractérisé en ce que ce joint (6 ou 21) comporte deux lèvres souples (7, 8 ; 22, 23) appliquées l'une sur l'autre, ce profilé (15) étant positionné de manière que sa branche précitée (15b) pénètre dans ce joint (6, 21) entre les lèvres (7, 8 ; 22, 23) appliquées de manière étanche sur ladite branche (15b) ; aussi bien lorsque la vitre (2) est dans sa position fermée relevée que dans sa position basse ouverte, ou dans toute position intermédiaire.

2. Dispositif selon la revendication 1, caractérisé en ce qu'il comporte une garniture (35) fixée le long du bord inférieur de la vitre (2), et deux lèvres d'étanchéité (36, 37) fixées sur la porte (1) et agencées de telle manière qu'en position haute fermée de la vitre l'une (36) des lèvres s'applique de manière étanche sur la garniture, et qu'en position basse ouverte de la vitre, après déplacement latéral de cette dernière, la seconde lèvre (37) s'applique de manière étanche sur la surface extérieure de la vitre.

3. Dispositif selon l'une des revendications 1 et 2, caractérisé en ce qu'il comprend un autre joint d'étanchéité (17) fixé sur un élément de carrosserie le long d'un au moins des côtés avant et arrière de la vitre (2) et qui est positionné pour s'appliquer sur le bord de la vitre lorsque celle-ci est en position haute fermée, affleurant la surface extérieure de la carrosserie.

4. Dispositif selon l'une des revendications 1 à 3, destiné notamment à des vitres non cylindriques, caractérisé en ce que la branche (15b) du profilé (15), sensiblement perpendiculaire à la vitre, et le joint d'étanchéité (21) sont dimensionnés de manière à pouvoir absorber une variation du rayon de courbure (R) de la vitre (2), par exemple par une variation de la largeur de ladite branche (15b, 15b1).

5. Porte de véhicule, caractérisée en ce qu'elle comporte un dispositif d'étanchéité selon l'une quelconque des revendications 1 à 4, ainsi que des moyens pour déplacer latéralement et guider la vitre (2) de sa position basse ouverte à sa position haute fermée et vice-versa, de façon qu'en position fermée la vitre affleure par ses quatre côtés la surface extérieure de la carrosserie.

6. Porte selon la revendication 5, dépourvue de cadre de réception de la vitre (2) en position relevée fermée, caractérisée en ce que son dispositif d'étanchéité comprend deux joints (6) fixés à des éléments (9) de la caisse du véhicule le long des côtés avant et arrière de la vitre.

7. Porte selon la revendication 5, comprenant un cadre de réception de la vitre (2) en position relevée fermée, caractérisée en ce que son dispositif d'étanchéité comprend deux joints (21) fixés sur des montants (19) du cadre.

8. Porte selon l'une quelconque des revendications 5 à 7, caractérisée en ce que les moyens de déplacement latéral et de guidage de la vitre (2) entre ses positions ouverte et fermée comportent des rails (41, 48) portés par des montants (40, 46) du cadre de la porte (1) et s'étendant le long des côtés avant et arrière de la vitre, chacun de ces rails est pourvu de moyens de guidage longitudinal d'un profilé précité (15, 52), fixé le long du bord intérieur de la vitre afin de guider le déplacement de la vitre, et les extrémités supérieures (41a, 48a) de ces rails de guidage (41, 48) sont coudées en direction de l'extérieur du véhicule sur une distance correspondant au déplacement latéral (d) que doivent effectuer la vitre et ses profilés (15, 52) coopérant avec les rails, pour que la vitre affleure la surface de la carrosserie en position haute fermée.

9. Porte selon la revendication 8, caractérisée en ce que les rails sont deux cames (47, 48), sous forme par exemple de rainures, qui reçoivent chacune à coulisse un élément (49, 51) tel qu'un pion, solidaire du profilé de vitre associé (52), ces deux cames (47, 48) sont décalées transversalement, la came intérieure (48) reçoit un élément de guidage (51) fixé à la partie inférieure du profilé (52), et l'extrémité supérieure (48a) de cette came intérieure (48) est coudée transversalement vers l'extérieur du véhicule sur une longueur correspondant au déplacement latéral (d) que doit effectuer la vitre (2) en fin de course vers sa position fermée, tandis que le tracé de la came extérieure (47) se rapproche dans sa partie supérieure (47a) de la surface extérieure de la carrosserie.

10. Porte selon la revendication 9, caractérisée en ce que les moyens de guidage de la vitre (2) comprennent une came (41), sous forme par exemple d'une rainure le long du bord arrière de la vitre, formée dans un montant (40) du cadre de la porte (1), cette rainure (41) recevant à coulisse un élément de guidage (42) tel qu'un pion solidaire du profilé de vitre associé (15) et son extrémité supérieure (41a) est coudée transversalement vers l'extérieur du véhicule sur une longueur correspondant au déplacement latéral (d) de la vitre en fin de course vers sa position fermée.

11. Porte selon l'une des revendications 9 et 10, caractérisée en ce que les éléments de guidage (42, 49, 51) des profilés (15, 52) sur les cames (41, 47, 48) sont fixés aux extrémités des branches (15b, 52b) des profilés sensiblement perpendiculaires à la vitre (2).

12. Porte selon l'une quelconque des revendications 5 à 11, caractérisée en ce que chaque profilé (15, 52) est équipé d'une pièce (43) susceptible d'être entraînée par un mécanisme de lève-vitre (3), et qui comporte une extension transversale (45) traversant librement le profilé, lequel peut ainsi se déplacer transversalement sur ladite pièce en fin de course de fermeture de la vitre (2).

13. Porte selon la revendication 12, caractérisée en ce que la pièce (43) d'entrainement du profilé (15, 52) est solidaire d'un câble (4, 5) de lève-vitre (3).

## Patentansprüche (Patentansprüche für folgende(n) Vertragsstaat(en): DE, GB)

1. Abdichtvorrichtung für die Fensterscheibe (2) der Tür (1) eines Fahrzeuges, welche wenigstens eine Verbindungsstelle (6 oder 21) aus zwei weichen Lippen (7, 8; 22, 23), die aneinanderliegen, und ein fest mit der Innenfläche der Fensterscheibe verbundenes Profil (15), das ein Bein (15b) umfaßt, welches in eine Richtung im wesentlichen senkrecht zu der Fensterscheibe ausgerichtet ist, aufweist, wobei dieses Profil (15) derart angeordnet ist, daß sein vorgenanntes Bein (15b) in die Verbindungsstelle (6, 21) zwischen die Lippen, die dicht an dem genannten Bein (15b) liegen, dringt, ebenso, wenn die Fensterscheibe (2) in angehobener geschlossener Position ist, mit ihren vier Seiten an die Außenfläche der Karosserie (10) des Fahrzeuges passend, wie auch, wenn diese Fensterscheibe in unterer offener Position ist, nachdem eine seitliche Verlagerung (d) in Richtung auf das Innere des Fahrzeuges bewirkt worden ist, und in jeder Zwischenposition, und die einen Beschlag (35), der entlang der Unterkante der Fensterscheibe (2) befestigt ist, und zwei Dichtlippen (36, 37), die an der Tür (1) befestigt und derart eingerichtet sind, daß in oberer geschlossener Position der Fensterscheibe (2) die eine (36) der Lippen sich dichtend an den Beschlag legt und daß in unterer offener Position der Fensterscheibe, nach der seitlichen Verlagerung der letzteren, die zweite Lippe (37) sich dichtend an die Außenfläche der Fensterscheibe legt, umfaßt.

2. Vorrichtung nach Anspruch 1, dadurch gekennzeichnet, daß sie eine weitere Dichtverbindung (17) aufweist, die an einem Element der Karosserie entlang einer wenigstens der Vorder- und Hinterseiten der Fensterscheibe (2) befestigt ist und die so angeordnet ist, daß sie sich an die Kante der Fensterscheibe legt, wenn diese in oberer geschlossener Position ist, an die Außenfläche der Karosserie passend.

3. Vorrichtung nach einem der Ansprüche 1 oder 2, insbesondere für nicht-zylindrische Fensterscheiben bestimmt, dadurch gekennzeichnet, daß das Bein (15b) des Profiles (15), im wesentlichen senkrecht zu der Fensterscheibe, und die Dichtverbindung (21) so bemessen sind, daß sie Änderung des Biegeradius (R) der Fensterscheibe (2) auffangen können, beispielsweise durch eine Änderung der Breite des besagten Beines (15b, 15b1).

4. Fahrzeugtür, dadurch gekennzeichnet, daß sie eine Abdichtvorrichtung nach einem der Ansprüche 1 bis 3 umfaßt, ebenso wie Einrichtungen zum seitlichen Verlagern und Führen der Fensterscheibe (2) aus ihrer unteren offenen Position in ihre obere geschlossene Position und umgekehrt, so daß in geschlossener Position die Fensterscheibe mit ihren vier Seiten an die Außenfläche der Karosserie paßt.

5. Tür nach Anspruch 4, ohne Aufnahmerahmen für die Fensterscheibe (2) in angehobener geschlossener Position, dadurch gekennzeichnet, daß ihre Abdichtvorrichtung zwei Verbindungsstellen (6) aufweist, die an Elementen (9) der Karosse des Fahrzeuges entlang der Vorder- und Hinterseite der Fensterscheibe befestigt sind.

6. Tür nach Anspruch 4, mit einem Aufnahmerahmen für die Fensterscheibe (2) in angehobener geschlossener Position, dadurch gekennzeichnet, daß ihre Abdichtvorrichtung zwei Verbindungsstellen (21) aufweist, die an Schenkeln (19) des Rahmens befestigt sind.

7. Tür nach einem der Ansprüche 4 bis 6, dadurch gekennzeichnet, daß die Einrichtungen zum seitlichen Verlagern und Führen der Fensterscheibe (2) zwischen ihrer offenen und geschlossenen Position Schienen (41, 48) umfassen, die von Schenkeln (40, 46) des Rahmens der Tür (1) getragen sind und sich entlang der Vorder- und Hinterseite der Fensterscheibe erstrecken, wobei jede dieser Schienen mit Einrichtungen zum Führen in Längsrichtung eines vorgenannten Profiles (15, 52) versehen ist, befestigt entlang der Innenkante der Fensterscheibe, um die Verlagerung der Fensterscheibe zu führen, und die oberen Enden (41a, 48a) dieser Führungsschienen (41, 48) in Richtung auf das Äußere des Fahrzeuges über eine Entfernung gekrümmt sind, die der seitlichen Verlagerung (d) entspricht, welche bewirken sollen, daß die Fensterscheibe und ihre Profile (15, 52) mit den Schienen zusammenwirken, damit die Fensterscheibe an die Oberfläche der Karosserie in oberer geschlossener Position paßt.

8. Tür nach Anspruch 7, dadurch gekennzeichnet, daß die Schienen zwei Kurven (47, 48) sind, in Form beispielsweise von Nuten, die jede einstellbar ein Element (49, 51), so wie ein fest an dem Profil der zugeordneten Fensterscheibe (52) befindliches Metallstück, wobei die beiden Kurven (47, 48) quer versetzt sind, wobei die innere Kurve (48) ein Führungselement (51) aufnimmt, das an dem unteren Teil des Profiles (52) befestigt ist und das obere Ende (48a) dieser inneren Kurve (48) quer in Richtung auf das Äußere des Fahrzeuges über eine Länge gekrümmt ist, die der seitlichen Verlagerung (d) entspricht, welche die Fensterscheibe (2) schließlich in ihre geschlossene Position bringen soll, während die Linienführung der äußeren Kurve (47) sich in ihrem oberen Teil (47a) der Außenfläche der Karosserie annähert.

9. Tür nach Anspruch 8, dadurch gekennzeichnet, daß die Einrichtungen zum Führen der Fensterscheibe (2) eine Kurve (41) aufweisen, in Form beispielsweise einer Nut entlang der Hinterkante der Fensterscheibe, in einem Schenkel (40) des Rahmens der Tür (1) ausgebildet, wobei diese Nut verstellbar ein Führungselement (42) aufnimmt, so wie ein fest an dem Profil der zugeordneten Fensterscheibe (15) befindliches Metallstück, und ihr oberes Ende (41a) quer in Richtung auf das Äußere des Fahzeuges über eine Länge gekrümmt ist, die der seitlichen Verlagerung (d) der Fensterscheibe am Ende des Laufes in ihre geschlossene Position entspricht.

10. Tür nach einem der Ansprüche 8 und 9, dadurch gekennzeichnet, daß die Führungselemente (42, 49, 51) der Profile (15, 52) auf den Kurven (41, 47, 48) an den Enden der Beine (15b, 52b) der Profile, die in wesentlichen senkrecht zu der Fensterscheibe (2) sind, befestigt sind.

11. Tür nach einem der Ansprüche 4 bis 10, dadurch gekennzeichnet, daß jedes Profil (15, 52) mit einem Teil (43) ausgestattet ist, das geeignet ist, von einem Fensterkurbelmechanismus (3) angetrieben zu werden und eine seitliche Ausdehnung (45) hat, die frei das Profil überquert, das sich somit quer auf das besagte Teil am Ende des Laufes der Fensterscheibe (2) verlagern kann.

12. Tür nach Anspruch 11, dadurch gekennzeichnet, daß das Teil (43) zum Antreiben des Profiles (15, 52) fest an einem Kabel (4, 5) der Fensterkurbel (3) liegt.

## Patentansprüche (Patentansprüche für folgende(n) Vertragsstaat(en): ES, IT, SE)

1. Abdichtvorrichtung für die Fensterscheibe (2) der Tür (1) eine Fahrzeuges, welche wenigstens eine Verbindungsstelle (6 oder 21) und ein fest mit der Innenfläche der Fensterscheibe verbundenes Profil (15), das ein Bein (15b) umfaßt, welches in eine Richtung im wesentlichen senkrecht zu der Fensterscheibe ausgerichtet ist, aufweist, wobei die Fensterscheibe (2) verlagerbar ist, ebenso in angehobener geschlossener Position, mit ihren vier Seiten an die Außenfläche der Karosserie (10) des Fahrzeuges passend, wie auch in unterer offener Position, nachdem eine seitliche Verlagerung (d) in Richtung auf das Innere des Fahrzeuges bewirkt worden ist, dadurch gekennzeichnet, daß diese Verbindungsstelle (6 oder 21) zwei weiche Lippen (7, 8; 22, 23) umfaßt, welche aneinanderliegen, wobei das Profil (15) derart angeordnet ist, daß das vorgenannte Bein (15b) in diese Verbindungsstelle (6, 21) zwischen die Lippen (7, 8; 22, 23), die dichtend an dem Bein (15b) liegen, dringt, ebenso, wenn die Fensterscheibe (2) in ihrer angehobenen geschlossenen Position ist, wie auch in der unteren offenen Position und in jeder Zwischenposition.

2. Vorrichtung nach Anspruch 1, dadurch gekennzeichnet, daß sie einen Beschlag (35), der entlang der Unterkante der Fensterscheibe (2) befestigt ist, und zwei Dichtlippen (36, 37) umfaßt, die an der Tür (1) befestigt und derart eingerichtet sind, daß in oberer geschlossener Position der Fensterscheibe (2) die eine (36) der Lippen sich dichtend an den Beschlag legt und daß in unterer offener Position der Fensterscheibe, nach der seitlichen Verlagerung der letzteren, die zweite Lippe (37) sich dichtend an die Außenfläche der Fensterscheibe legt.

3. Vorrichtung nach Anspruch 1 oder 2, dadurch gekennzeichnet, daß sie eine weitere Dichtverbindung (17) aufweist, die an einem Element der Karosserie entlang einer wenigstens der Vorder- und Hinterseiten der Fensterscheibe (2) befestigt ist und die so angeordnet ist, daß sie sich an die Kante der Fensterscheibe legt, wenn diese in oberer geschlossener Position ist, an die Außenfläche der Karosserie passend.

4. Vorrichtung nach einem der Ansprüche 1 bis 3, insbesondere für nicht-zylindrische Fensterscheiben bestimmt, dadurch gekennzeichnet, daß das Bein (15b) des Profiles (15), im wesentlichen senkrecht zu der Fensterscheibe, und die Dichtverbindung (21) so bemessen sind, daß sie Änderung des Biegeradius (R) der Fensterscheibe (2) auffangen können, beispielsweise durch eine Änderung der Breite des besagten Beines (15b, 15b1).

5. Fahrzeugtür, dadurch gekennzeichnet, daß sie eine Abdichtvorrichtung nach einem der Ansprüche 1 bis 3 umfaßt, ebenso wie Einrichtungen zum seitlichen Verlagern und Führen der Fensterscheibe (2) aus ihrer unteren offenen Position in ihre obere geschlossene Position und umgekehrt, so daß in geschlossener Position die Fensterscheibe mit ihren vier Seiten an die Außenfläche der Karosserie paßt.

6. Tür nach Anspruch 5, ohne Aufnahmerahmen für die Fensterscheibe (2) in angehobener geschlossener Position, dadurch gekennzeichnet, daß ihre Abdichtvorrichtung zwei Verbindungsstellen (6) aufweist, die an Elementen (9) der Karosse des Fahrzeuges entlang der Vorder- und Hinterseite der Fensterscheibe befestigt sind.

7. Tür nach Anspruch 5, mit einem Aufnahmerahmen für die Fensterscheibe (2) in angehobener geschlossener Position, dadurch gekennzeichnet, daß ihre Abdichtvorrichtung zwei Verbindungsstellen (21) aufweist, die an Schenkeln (19) des Rahmens befestigt sind.

8. Tür nach einem der Ansprüche 5 bis 7, dadurch gekennzeichnet, daß die Einrichtungen zum seitlichen Verlagern und Führen der Fensterscheibe (2) zwischen ihrer offenen und geschlossenen Position Schienen (41, 48) umfassen, die von Schenkeln (40, 46) des Rahmens der Tür (1) getragen sind und sich entlang der Vorder- und Hinterseite der Fensterscheibe erstrecken, wobei jede dieser Schienen mit Einrichtungen zum Führen in Längsrichtung eines vorgenannten Profiles (15, 52) versehen ist, befestigt entlang der Innenkante der Fensterscheibe, um die Verlagerung der Fensterscheibe zu führen, und die oberen Enden (41a, 48a) dieser Führungsschienen (41, 48) in Richtung auf das Äußere des Fahrzeuges über eine Entfernung gekrümmt sind, die der seitlichen Verlagerung (d) entspricht, welche bewirken sollen, daß die Fensterscheibe und ihre Profile (15, 52) mit den Schienen zusammenwirken, damit die Fensterscheibe an die Oberfläche der Karosserie in oberer geschlossener Position paßt.

9. Tür nach Anspruch 8, dadurch gekennzeichnet, daß die Schienen zwei Kurven (47, 48) sind, in Form beispielsweise von Nuten, die jede einstellbar ein Element (49, 51), so wie ein fest an dem Profil der zugeordneten Fensterscheibe (52) befindliches Metallstück, wobei die beiden Kurven (47, 48) quer versetzt sind, wobei die innere Kurve (48) eine Führungselement (51) aufnimmt, das an dem unteren Teil des Profiles (52) befestigt ist und das obere Ende (48a) dieser inneren Kurve (48) quer in Richtung auf das Äußere des Fahrzeuges über eine Länge gekrümmt ist, die der seitlichen Verlagerung (d) entspricht, welche die Fensterscheibe (2) schließlich in ihre geschlossene Position bringen soll, während die Linienführung der äußere Kurve (47) sich in ihrem oberen Teil (47a) der Außenfläche der Karosserie annähert.

10. Tür nach Anspruch 9, dadurch gekennzeichnet, daß die Einrichtungen zum Führen der Fensterscheibe (2) eine Kurve (41) aufweisen, in Form beispielsweise einer Nut entlang der Hinterkante der Fensterscheibe, in einem Schenkel (40) des Rahmens der Tür (1) ausgebildet, wobei diese Nut verstellbar eine Führungselement (42) aufnimmt, so wie ein fest an dem Profil der zugeordneten Fensterscheibe (15) befindliches Metallstück, und ihr oberes Ende (41a) quer in Richtung auf das Äußere des Fahrzeuges über eine Länge gekrümmt ist, die der seitlichen Verlagerung (d) der Fensterscheibe am Ende des Laufes in ihre geschlossene Position entspricht.

11. Tür nach einem der Ansprüche 9 und 10, dadurch gekennzeichnet, daß die Führungselemente (42, 49, 51) der Profile (15, 52) auf den Kurven (41, 47, 48) an den Enden der Beine (15b, 52b) der Profile, die in wesentlichen senkrecht zu der Fensterscheibe (2) sind, befestigt sind.

12. Tür nach einem der Ansprüche 5 bis 11, dadurch gekennzeichnet, daß jedes Profil (15, 52) mit einem Teil (43) ausgestattet ist, das geeignet ist, von einem Fensterkurbelmechanismus (3) angetrieben zu werden und eine seitliche Ausdehnung (45) hat, die frei das Profil überquert, das sich somit quer auf das besagte Teil am Ende des Laufes der Fensterscheibe (2) verlagern kann.

13. Tür nach Anspruch 12, dadurch gekennzeichnet, daß das Teil (43) zum Antreiben des Profiles (15, 52) fest an einem Kabel (4, 5) der Fensterkurbel (3) liegt.

## Claims (Claims for the following Contracting State(s): DE, GB)

1. Seating device for the window (2) of a vehicle door (1), comprising at least one seal (6 or 21) with two flexible lips (7, 8; 22, 23) applied against one another and a section (15) integral with the inner face of the window, having an arm (15b) orientated in a direction approximately perpendicular to the window, this section (15) being positioned so that its aforementioned arm (15b) penetrates into the seal (6, 21) between the lips applied tightly against the said arm (15b), both when the window (2) is in the raised closed position, its four sides being flush with the outer surface of the bodywork (10) of the vehicle, and when this window is in the lower open position after having effected a lateral displacement (d) towards the inside of the vehicle, and in any intermediate position, and comprising a fitting (35) fixed along the lower edge of the window (2), and two sealing lips (36, 37) fixed to the door (1) and arranged such that, in the upper closed position of the window one of the lips (36) is applied tightly against the fitting, and that in the lower open position of the window; after lateral displacement of the latter, the second lip (37) is applied tightly against the outer surface of the window.

2. Device according to claim 1, characterized in that it comprises another weather seal (17) fixed on a bodywork element along at least one of the front and rear sides of the window (2) and which is positioned so as to be applied against the edge of the window when the latter is in the upper closed position, flush with the outer surface of the bodywork.

3. Device according to one of claims 1 and 2, intended in particular for non-cylindrical windows, characterized in that the arm (15b) of the section (15), which is approximately perpendicular to the window, and the weather seat (21) are dimensioned so as to be able to absorb a variation in the radius of curvature (R) of the window (2), for example, by a variation in the width of said arm (15b, 15b1).

4. Vehicle door, characterized in that it comprises a sealing device according to any one of claims 1 to 3, as well as means for laterally displacing and guiding the window (2) from its lower open position to its upper closed position and vice-versa, such that in its closed position the window is flush on all four sides with the outer surface of the bodywork.

5. Door according to claim 4, having no frame for receiving the window (2) in the raised closed position, characterized in that its seating device comprises two seals (6) fixed to elements (9) of the body of the vehicle along the front and rear sides of the window.

6. Door according to claim 4, comprising a frame for receiving the window (2) in the raised closed position, characterized in that its sealing device comprises two seals (21) fixed to the pillars (19) of the frame.

7. Door according to any one of claims 4 to 6, characterized in that the means for laterally displacing and guiding the window (2) between its open and closed positions comprise rails (41, 48) carried by pillars (40, 46) of the frame of the door (1) and extending along the front and rear sides of the window, each of these rails is provided with means for longitudinally guiding an aforementioned section (15, 52) fixed along the inner edge of the window in order to guide the displacement of the window, and the upper ends (41a, 48a) of these guide rails (41, 48) are bent towards the outside of the vehicle over a distance corresponding to the lateral displacement (d) which the window and its sections (15, 52) co-operating with the rails must make so that the window is flush with the surface of the bodywork in the upper closed position.

8. Door according to claim 7, characterized in that the rails are two cams (47 , 48), in the form, for example, of grooves, which each receive in a sliding manner an element (49, 51) such as a stud, integral with the associated window section (52), these two cams (47, 48) are offset transversely, the inner cam (48) receives a guide element (51) fixed to the lower part of the section (52), and the upper end (48a) of this inner cam (48) is bent tranversely towards the outside of the vehicle over a length corresponding to the lateral displacement (d) which the window (2) must make at the end of its travel towards its closed position, while the track of the outer cam (47) approaches, in its upper part (47a), the outer surface of the bodywork.

9. Door according to claim 8, characterized in that the means for guiding the window (2) comprise a cam (41), for example, in the form of a groove along the rear edge of the window, formed in a pillar (40) of the frame of the door (1), this groove (41) receiving, in a sliding manner, a guide element (42) such as a stud integral with the associated window section (15) and its upper end (41a) is bent transversely towards the outside of the vehicle over a length corresponding to the lateral displacement (d) of the window at the end of its travel towards its closed position.

10. Door according to one of claims 8 and 9, characterized in that the guide elements (42, 49, 51) of the sections (15, 52) on the cams (41, 47, 48) are fixed to the ends of the arms (15b, 52b) of the sections which are approximately perpendicular to the window (2).

11. Door according to any one of claims 4 to 10, characterized in that each section (15, 52) is equipped with a piece (43) capable of being driven by a window winder mechanism (3), and which has a transverse extension (45) passing freely through the section, which section may thus be displaced transversely on the said piece at the end of the closing travel of the window (2).

12. Door according to claim 11, characterized in that the piece (43) driving the section (15, 52) is integral with a cable (4, 5) of the window winder (3).

## Claims (Claims for the following Contracting State(s): ES, IT, SE)

1. Sealing device for the window (2) of a vehicle door (1), comprising at least one seal (6 or 21) and a section (15) integral with the inner face of the window, having an arm (15b) orientated in a direction approximately perpendicular to the window, the window (2) being displaceable, both when in the raised closed position, all its four sides being flush with the outer surface of the bodywork (10) of the vehicle, and in the lower open position after having effected a lateral displacement (d) towards the inside of the vehicle, and in any intermediate position characterized in that this seal (6 or 21) comprises two flexible lips (7, 8; 22, 23) applied against one another, this section (15) being positioned such that its aforementionned arm (15b) penetrates into this seal (6, 21) between the lips (7, 8: 22, 23) applied tightly against the said arm (15b), both when the window (2) is in the raised closed position and in its lower open position or in any position.

2. Device according to claim 1, characterized in that it comprises a fitting (35) fixed along the lower edge of the window (2) and two sealing lips (36, 37) fixed to the door (1) and arranged such that, in the upper closed position of the window one of the lips (36) is applied tightly against the fitting, and that in the lower open position of the window, after lateral displacement of the latter, the second tip (37) is applied tightly against the outer surface of the window.

3. Device according to one of claims 1 and 2, characterized in that it comprises another weather seal (17) fixed on a bodywork element along at least one of the front and rear sides of the window (2) and which is positioned so as to be applied against the edge of the window when the latter is in the upper closed position, flush with the outer surface of the bodywork.

4. Device according to one of claims 1 to 3, intended in particular for non-cylindrical windows, characterized in that the arm (15b) of the section (15), which is approximately perpendicular to the window, and the weather seal (21) are dimensioned so as to be able to absorb a variation in the radius of curvature (R) of the window (2), for example, by a variation in the width of said arm (15b, 15b1).

5. Vehicle door, characterized in that it comprises a sealing device according to any one of claims 1 to 4, as well as means for laterally displacing and guiding the window (2) from its lower open position to its upper closed position and vice-versa, such that in its closed position the window is flush on all four sides with the outer surface of the bodywork.

6. Door according to claim 5, having no frame for receiving the window (2) in the raised closed position, characterized in that its sealing device comprises two seals (6) fixed to elements (9) of the body of the vehicle along the front and rear sides of the window.

7. Door according to claim 5, comprising a frame for receiving the window (2) in the raised closed position, characterized in that its sealing device comprises two seals (21) fixed to the pillars (19) of the frame.

8. Door according to any one of claims 5 to 7, characterized in that the means for laterally displacing and guiding the window (2) between its open and closed positions comprise rails (41, 48) carried by pillars (40, 46) of the frame of the door (1) and extending along the front and rear sides of the window, each of these rails is provided with means for longitudinally guiding an aforementioned section (15, 52) fixed along the inner edge of the window in order to guide the displacement of the window, and the upper ends (41a, 48a) of these guide rails (41, 48) are bent towards the outside of the vehicle over a distance corresponding to the lateral displacement (d) which the window and its sections (15, 52) co-operating with the rails must make so that the window is flush with the surface of the bodywork in the upper closed position.

9. Door according to claim 8, characterized in that the rails are two cams (47 , 48), in the form, for example, of grooves, which each receive in a sliding manner an element (49, 51) such as a stud, integral with the associated window section (52), these two cams (47, 48) are offset transversely, the inner cam (48) receives a guide element (51) fixed to the lower part of the section (52), and the upper end (48a) of this inner cam (48) is bent tranversely towards the outside of the vehicle over a length corresponding to the lateral displacement (d) which the window (2) must make at the end of its travel towards its closed position, while the track of the outer cam (47) approaches, in its upper part (47a), the outer surface of the bodywork.

10. Door according to claim 9, characterized in that the means for guiding the window (2) comprise a cam (41), for example, in the form of a groove along the rear edge of the window, formed in a pillar (40) of the frame of the door (1), this groove (41) receiving, in a sliding manner, a guide element (42) such as a stud integral with the associated window section (15) and its upper end (41a) is bent transversely towards the outside of the vehicle over a length corresponding to the lateral displacement (d) of the window at the end of its travel towards its closed position.

11. Door according to one of claims 9 and 10, characterized in that the guide elements (42, 49, 51) of the sections (15, 52) on the cams (41, 47, 48) are fixed to the ends of the arms (15b, 52b) of the sections which are approximately perpendicular to the window (2).

12. Door according to any one of claims 5 to 11, characterized in that each section (15, 52) is equipped with a piece (43) capable of being driven by a window winder mechanism (3), and which has a transverse extension (45) passing freely through the section, which section may thus be displaced transversely on the said piece at the end of the closing travel of the window (2).

13. Door according to claim 12, characterized in that the piece (43) driving the section (15, 52) is integral with a cable (4, 5) of the window winder (3).
